# EUROPÄISCHE PATENTSCHRIFT

(11) **EP 3 908 684 B1**
(45) Veröffentlichungstag und Bekanntmachung des Hinweises auf die Patenterteilung: **24.04.2024**
(21) Anmeldenummer: 20700249.4
(22) Anmeldetag: 07.01.2020
(51) Int. Cl.: C23F 1/02, B24C 1/02, B26B 21/60, C23F 1/04, B23P 15/40

(54) **HERSTELLUNG VON GEÄTZTEN STRUKTUREN AUS EINEM STAHLWERKSTOFF**
PRODUCING ETCHED STRUCTURES MADE OF A STEEL MATERIAL
FABRICATION DE STRUCTURES GRAVÉES À PARTIR D'UN MATÉRIAU EN ACIER

(30) Priorität: 09.01.2019 DE 102019100424
(43) Veröffentlichungstag der Anmeldung: 17.11.2021
(73) Patentinhaber: Micrometal GmbH, 79379 Müllheim (DE)
(72) Erfinder: LOPEZ, Angel, 75180 Pforzheim (DE); LEHMANN, Bernd, 79400 Kandern (DE)
(74) Vertreter: Cohausz & Florack
(86) Internationale Anmeldenummer: PCT/EP2020/050173
(87) Internationale Veröffentlichungsnummer: WO 2020/144158

(56) Entgegenhaltungen:
- EP-A2- 1 582 316
- DE-A1-102016 115 353
- US-A- 4 105 493
- US-A- 4 211 006
- US-A1- 2007 157 762
- US-A1- 2007 190 302

## Beschreibung

Die Erfindung betrifft ein Verfahren zur Herstellung von geätzten Strukturen aus einem Stahlwerkstoff. Ferner betrifft die Erfindung eine Schneide und einen Filter aus einem Stahlwerkstoff, wobei die Schneide bzw. der Filter mit dem erfindungsgemäßen Verfahren hergestellt sind.

Schneiden, beispielsweise Klingen, Nadelspitzen und Folien wie Scherfolien erfordern abhängig vom Verwendungszweck eine spezielle Geometrie. Beispielsweise müssen Klingen und Scherfolien zur Verwendung beim Rasieren einerseits ein zuverlässiges und gleichmäßiges Rasieren mit einer hohen Schneidfähigkeit durch die Haare ermöglichen. Andererseits sollte ein leichtes Gleiten der Schneide über die Haut und damit eine möglichst hautschonende und irritationsarme Rasur gewährleistet sein.

Schneiden von Scherfolien für die Verwendung beim Rasieren werden beispielsweise durch ein galvanisches Abscheiden von Werkstoffen basierend auf Nickel oder Nickellegierungen hergestellt. Entsprechende Nickelwerkstoffe werden elektrochemisch auf ein Substrat aufgebracht und strukturiert. Die Seite des abgeschiedenen Nickelwerkstoffs, welche dem Substrat zugewandt ist, bildet hierbei eine Scharfkantenseite mit scharfkantigen Schneidkanten mit geringem Kantenradius aus, während die der Scharfkantenseite gegenüberliegende Seite als Rundkantenseite mit Rundkanten ausgebildet wird. Die Scharfkantenseite und die Rundkantenseite ergeben hierbei Seiten mit unterschiedlichen Eigenschaften, wobei die Schneidkanten eine effektive Rasur ermöglichen, während die Rundkanten ein schonendes Gleiten der Schneide über die Haut gewährleisten.

Filter wie beispielsweise Kaffeefilter, Teefilter, Stärkesiebe oder Fasersiebe, wie diese in der Hygieneartikelproduktion verwendet werden, können eine ähnliche Struktur von Kanten an einem flachen Werkstoff aufweisen. Hierbei ist es vorteilhaft, wenn an Durchgangsöffnungen des Filters auf einer Seite eine Rundkantenseite vorgesehen ist.

Auf der gegenüberliegenden Seite kann eine Scharfkantenseite mit Scharfkanten vorgesehen sein. Das zu filtrierende Medium neigt dann weniger zu Verstopfungen des Filters, wobei hierdurch die Filter auch leichter zu reinigen sind. Beispielsweise kann bei Kaffeefiltern das zu filtrierende Medium von der Scharfkantenseite her zugeführt werden, womit das verbleibende Kaffeepulver nach der Extraktion leicht entfernt werden kann. Filter mit entsprechenden Strukturen werden beispielsweise ebenfalls mit elektrochemischen Methoden auf Basis von Nickelwerkstoffen hergestellt.

Schneiden und Filter, basierend auf Nickelwerkstoffen bergen jedoch auch Nachteile im Hinblick auf Umwelt- und Gesundheitsaspekte. Nickelwerkstoffe werden mit Hautunverträglichkeiten und der Auslösung von Allergien in Verbindung gebracht, was insbesondere bei Produkten problematisch ist, welche rechtlichen Beschränkungen (z.B. Reach/ROHS) unterliegen. Daher sind Nickelwerkstoffe für Hygieneprodukte wie Rasierer nicht ohne weiteres zu verwenden. Zudem können die Herstellungsverfahren von Produkten auf Basis von Nickelwerkstoffen problematisch im Hinblick auf eine Umweltverträglichkeit sein und zusätzlichen Aufwand erfordern.

Alternativ zu Nickelwerkstoffen werden deshalb auch Stahlwerkstoffe wie Stahl, insbesondere Edelstahl als Werkstoffe für Schneiden und Filter in Betracht gezogen, da diese typischerweise eine bessere Verträglichkeit aufweisen und kosteneffektiv zu produzieren sind.

Schneiden, basierend auf Stahlwerkstoffen werden überwiegend aus Flachprodukten gestanzt, optional gebogen und zur Erzeugung der Scharfkante bzw. Schneidkante geschliffen. Hierbei wird ein gestanztes Flachprodukt mit einem Winkel zu einer Oberflächennormalen geschliffen, so dass auf einer Seite des Flachprodukts eine scharfe Schneidkante mit einem spitzen Kantenwinkel entsteht, während auf der gegenüberliegenden Seite eine Kante mit stumpfem Kantenwinkel erzeugt wird. Jedoch weist die Kante mit stumpfem Winkel typischerweise aufgrund des Schleifvorgangs ebenso einen kleinen Kantenradius auf und ist nicht optimal in der Gleitfähigkeit.

Prinzipiell ist es möglich, Stahlwerkstoffe über eine ätztechnische Behandlung zu bearbeiten und zu strukturieren. Zur Herstellung von Schneiden und Filtern ist jedoch die mit der ätztechnischen Behandlung entstehende Kantenform problematisch. Die geätzten Kanten weisen typischerweise zu große Kantenradien auf bzw. sind als Rundkanten ausgebildet und stellen daher für viele Anwendungen keine ausreichende Schneidfähigkeit bereit.

Die Druckschrift US 2007/157762 A1 offenbart ein Verfahren, bei dem eine Metallfolie beidseitig mit einem ätzresistenten Fotolack beschichtet wird, der ausgehärtet wird. Auf einer ersten Seite der Metallfolie haftet der Fotolack aufgrund von beabsichtigen Verunreinigung nicht optimal. Auf der zweiten Seite hingegen wurden die Verunreinigungen vor dem Aufbringen des Fotolacks entfernt, so dass eine gute Haftung besteht. Während des Ätzens entsteht somit auf der zweiten Seite eine scharfe Kante. Auf der ersten Seite hingegen löst sich der Fotolack von der Kante ausgehend langsam ab, so dass eine runde Kante entsteht.

Die US 410 5493 A offenbart ein das Aufbringen von ätzresistentem Fotolack auf einen Metallstreifen, das Entwickeln des Fotolacks, das wiederholte Ätzen der ungeschützten Stellen zum Herstellen von scharfen und abgerundeten Kanten.

Die DE 10 2016 115353A1 offenbart ein Verfahren zur Herstellung eines dünnen feststehenden Messers für einen Rasierapparat, das mittels eines Ätzverfahrens unter Einsatz einer Korrosionsschutzschicht hergestellt wird, wobei Messerzähne mit einem Schneide-Spitzwinkel herausgeätzt werden.

Die EP 1 582316 A2 offenbart ein Verfahren zur Herstellung von Rasierfolien, wobei ein im Wesentlichen mechanisches Verfahren offenbart wird, welches durch einige Ätzschritte ergänzt wird.

Die US 4 211 006 A offenbart ein Verfahren, wobei Aussparungen in eine Rasierklinge geätzt werden und anschließend die Aussparungen mit einem elektrochemisch abscheidbaren Material gefüllt werden.

Die US 2007/190302 A1 offenbart einen Filter aus einem Stahlwerkstoff mit mindestens eine Scharfkante und mit mindestens einer Rundkante.

Der vorliegenden Erfindung liegt die Aufgabe zugrunde, ein Verfahren zur Herstellung von geätzten Strukturen wie Schneiden und Filtern vorzuschlagen, mit welchem die Kantenform der geätzten Struktur aus einem Stahlwerkstoff optimiert wird und welches eine flexible Herstellung von geätzten Strukturen insbesondere mit asymmetrischen Geometrien erlaubt. Weiter werden zur Lösung der Aufgabe eine Schneide und ein Filter aus einem Stahlwerkstoff angegeben.

Gemäß einer ersten bis dritten Lehre der Erfindung wird die genannte Aufgabe durch ein Verfahren mit den Merkmalen des Anspruches 1, durch ein Verfahren mit den Merkmalen des Anspruches 2 oder durch ein Verfahren mit den Merkmalen des Anspruches 3 gelöst.

Gemäß einer vierten Lehre der Erfindung wird die genannte Aufgabe durch eine Schneide aus einem Stahlwerkstoff gelöst, wobei die Schneide mit einem Verfahren gemäß einer der ersten bis dritten Lehre hergestellt ist, mit mindestens einer als Schneidkante ausgebildeten Scharfkante an einer Scharfkantenseite und mit mindestens einer der mindestens einen Schneidkante gegenüberliegenden Rundkante an einer Rundkantenseite, wobei mindestens eine Schneidkante einen Kantenradius von 20 nm bis 1000 nm, insbesondere von 25 nm bis 500 nm aufweist und/oder wobei die Rundkante einen Kantenradius von 0,01 mm bis 0,5 mm aufweist.

Gemäß einer fünften Lehre der Erfindung wird die genannte Aufgabe durch einen Filter aus einem Stahlwerkstoff gelöst, wobei der Filter mit einem Verfahren gemäß einer der ersten bis dritten Lehre hergestellt ist, mit mindestens einer Scharfkante an einer Scharfkantenseite und mit mindestens einer der mindestens einen Scharfkante gegenüberliegenden Rundkante an einer Rundkantenseite, wobei die mindestens eine Scharfkante einen Kantenradius von 1 µm bis 5 µm aufweist und/oder wobei die Rundkante einen Kantenradius von 0,01 mm bis 0,5 mm aufweist.

Die Verfahren umfassen mindestens die folgenden Schritte: Bereitstellen eines Flachprodukts aus einem Stahlwerkstoff, wobei zumindest für einen Abschnitt des Flachprodukts eine Seite des Flachprodukts als Scharfkantenseite ausgewählt wird und die der Scharfkantenseite gegenüberliegende Seite als Rundkantenseite ausgewählt wird; Beschichten der Scharfkantenseite des Flachprodukts zumindest teilweise mit einem ätzresistenten Fotolack; Entwickeln des ätzresistenten Fotolacks; Durchführen einer ätztechnischen Behandlung des Flachprodukts zum Erzeugen von mindestens einer Scharfkante an der Scharfkantenseite und zum Erzeugen von mindestens einer der Scharfkante gegenüberliegenden Kante an der Rundkantenseite; und optional Abrunden der mindestens einen Kante auf der Rundkantenseite.

Ein Flachprodukt aus einem Stahlwerkstoff wird bereitgestellt. Unter einem Flachprodukt können hierbei insbesondere Bänder, Bleche und Folien verstanden werden. Als Stahlwerkstoffe können für die Verwendung als Schneide oder Filter geeignete Stähle verwendet werden. Beispiele hierfür sind martensitische, ferritische, austenitische Edelstähle sowie Duplexstähle. Ebenso können Verbundwerkstoffe wie plattierte Werkstoffe eingesetzt werden, beispielsweise Kombinationen aus verschiedenen Stahlsorten oder auch Kombinationen aus Stahl und anderen metallischen Werkstoffen.

Zumindest für einen Abschnitt des Flachprodukts wird eine Seite des Flachprodukts als Scharfkantenseite ausgewählt und die der Scharfkantenseite gegenüberliegende Seite als Rundkantenseite ausgewählt. Zumindest für einen Abschnitt des Flachprodukts wird somit eine Zuordnung getroffen, welche Seite dieses Abschnitts zur Ausbildung einer Scharfkante und welche Seite zur Ausbildung einer Rundkante verwendet werden soll. Die Seiten, welche als Scharfkantenseite und Rundkantenseite ausgewählt werden, stellen hierbei insbesondere Seiten des Flachprodukts mit der größten Dimension bzw. Fläche dar, d.h. die Erstreckungsfläche eines Bands, Blechs oder einer Folie.

Das Flachprodukt kann strukturell an beiden Seiten identisch ausgebildet sein, d.h. die Auswahl der Scharfkantenseite und Rundkantenseite beeinflusst lediglich, an welcher Seite die weiteren Verfahrensschritte jeweils vorgenommen werden. In anderen Ausgestaltungen können die Seiten des Flachprodukts auch strukturelle Unterschiede aufweisen, z.B. durch eine einseitige Beschichtung oder andere Oberflächeneigenschaften einer Seite des Flachprodukts, wobei die Auswahl der Scharfkantenseite und Rundkantenseite anhand der strukturellen Ausgestaltung des Flachprodukts vorgenommen werden kann.

Ein Beschichten der Scharfkantenseite des Flachprodukts zumindest teilweise mit einem ätzresistenten Fotolack wird vorgenommen. Insbesondere wird der Abschnitt, für welchen die Scharfkantenseite und die Rundkantenseite ausgewählt wurden, teilweise oder vollständig mit dem ätzresistenten Fotolack beschichtet. Über eine teilweise Beschichtung kann der ätzresistente Fotolack mit einer Struktur aufgebracht werden, d.h. die Beschichtung mit dem ätzresistenten Fotolack kann Ausnehmungen bzw. blanke Bereiche auf dem Flachprodukt erzeugen, so dass mit der Struktur die Lage der Scharfkanten bereits vorgegeben wird. Ebenso kann die Beschichtung mit dem ätzresistenten Fotolack auch nach einem Aufbringen strukturiert werden. Der ätzresistente Fotolack wird entwickelt, wobei eine Aushärtung des Fotolacks sowie eine für die ätztechnische Behandlung ausreichende Haftung auf dem Flachprodukt erreicht werden kann.

Eine ätztechnische Behandlung des Flachprodukts wird durchgeführt, insbesondere nach einem Entwickeln des ätzresistenten Fotolacks. Mit der ätztechnischen Behandlung wird im Flachprodukt mindestens eine Scharfkante an der Scharfkantenseite durch den Ätzangriff erzeugt. Die mindestens eine Scharfkante liegt hierbei insbesondere an einem Übergang eines mit dem ätzresistenten Fotolack beschichteten Abschnitts zu einem unbeschichteten Abschnitt (bzw. mit einer ätzempfindlichen Beschichtung beschichteten Abschnitt). Ebenso wird mindestens eine der Scharfkante gegenüberliegenden Kante an der Rundkantenseite erzeugt, wobei insbesondere ein Ätzangriff durch die Dicke des Flachprodukts stattfindet (d.h. von der Scharfkantenseite zur Rundkantenseite) und somit Ausnehmungen in das Flachprodukt geätzt werden. Wenn mit dem erfindungsgemäßen Verfahren Filter hergestellt werden, wird mit der ätztechnischen Behandlung mindestens eine Durchgangsöffnung erzeugt, welche zum Durchlass des Filtrats geeignet ist.

Dadurch, dass ein ätzresistenter Fotolack auf das Flachprodukt gebracht wird, entstehen mit der ätztechnischen Behandlung am Übergang der mit dem ätzresistenten Fotolack beschichteten Abschnitte Kanten mit einem Kantenradius, welcher für eine Ausbildung einer Scharfkante ausreichend klein ist. Der ätzresistente Fotolack zeigt hierbei eine derartige Ätzresistenz, dass der beschichtete Abschnitt des Flachprodukts durch die ätztechnische Behandlung im Wesentlichen nicht angegriffen wird bzw. das für die ätztechnische Behandlung verwendete Ätzmittel nicht durch die Beschichtung dringt. In einer bevorzugten Ausgestaltung ist der ätzresistente Fotolack dafür ausgestaltet, ein Unterkriechen der Beschichtung, d.h. insbesondere ein wesentliches Eindringen des Ätzmittels in den Kontaktbereich von ätzresistentem Fotolack und Flachprodukt zu unterbinden. Weiter kann eine kontrollierte Hinterätzung des beschichteten Abschnitts ermöglicht werden, womit über den ätzresistenten Fotolack mindestens eine Kante mit kleinem Kantenradius zur Ausbildung von Scharfkanten entsteht.

Optional kann ein Abrunden der mindestens einen Kante auf der Rundkantenseite durchgeführt werden, um eine der Scharfkante gegenüberliegende Rundkante zu erhalten. Ein Abrunden der mindestens einen Kante auf der Rundkantenseite kann hierbei mit der ätztechnischen Behandlung zum Erzeugen der mindestens einen Scharfkante und/oder in einem separaten (nachfolgenden) Verfahrensschritt erfolgen. Unter einem Abrunden kann insbesondere eine Vergrößerung des Kantenradius, insbesondere mindestens um eine oder zwei Größenordnungen verstanden werden.

Mit den erfindungsgemäßen Verfahren können somit geätzte Strukturen auf Grundlage von Flachprodukten aus Stahlwerkstoff auf effiziente Weise erhalten werden. Insbesondere können mit der mindestens einen Scharfkante sowie der gegenüberliegenden (Rund-)Kante Geometrien erhalten werden, welche insbesondere für Schneiden zur Verwendung beim Rasieren vorteilhaft sind und welche bisher lediglich mit galvanisch abgeschiedenen Nickelwerkstoffen erreicht wurden. Besonders geeignet ist das Verfahren ebenfalls zur Herstellung von Filtern aus einem Stahlwerkstoff, welche über die Ausgestaltung der Rundkantenseite und der Scharfkantenseite insbesondere einen verbesserten Durchsatz beim Filtrieren und eine verbesserte Ablösefähigkeit des Filtrats aufweisen können.

Weiter kann über den Fotolack auch eine sehr flexible und insbesondere feine Strukturierung der Schneiden erfolgen, so dass auch (Scher-)Folien und Nadelspitzen mit vorteilhaften Schneidengeometrien erhalten werden. Über die Strukturierung der Scharfkanten anhand des ätzresistenten Fotolacks kann die Form des Kantenverlaufs vergleichsweise frei gewählt werden bzw. ein Freiformen der Scharfkante stattfinden. Somit können über das Verfahren Schneiden mit speziellen Geometrien erhalten werden.

Beispielsweise können Scharfkanten bzw. Schneidkanten mit Schneidzähnen ausgebildet bzw. Scharfkanten mit einem gezackten Verlauf erhalten werden. Dabei sind verschiedene Zahnformen für Schneidzähne denkbar, beispielsweise Schneidzähne mit bogenförmigen bzw. halbkreisförmigen Abschnitten. Die Schneidzähne können als Schneidzähne mit glatter bzw. gerader Vorderkante und/oder als dreieckige Schneidzähne ausgebildet sein. Die Schneidzähne können verschiedene Längen annehmen und insbesondere eine Kombination verschiedener Längen aufweisen. Schneidzähne können auch als geschränkte Schneidzähne ausgebildet sein, insbesondere als Stockzähne ("M"-Zähne) oder Wolfszähne.

Filter können ebenso auf flexible Weise mit Durchgangsöffnungen in verschiedenen Formen und Anordnungen hergestellt werden, beispielsweise mit Rundlöchern, Schlitzen und/oder Winkeln bzw. mit anderen Freiformen. Der Querschnitt der Durchgangsöffnung kann beispielsweise gerade oder konisch sein, wobei auch eine Kombination verschiedener Querschnittsformen denkbar ist. Insbesondere beträgt die minimale Abmessung einer Durchgangsöffnung eines Filters 0,020 mm.

Das Verfahren ermöglicht weiter eine besonders wirtschaftliche Herstellung geätzter Strukturen auf Grundlage kostengünstig produzierbarer Flachprodukte aus Stahlwerkstoff. Insbesondere kann das Verfahren auch mit Bändern als Flachprodukten durchgeführt werden, wobei beispielsweise die Herstellung der Schneiden, z.B. von (Scher-)Folien, und von Filtern in einem Endlosverfahren bzw. einem Rolle-zu-Rolle-Verfahren (Reel-to-Reel) erfolgen kann.

Die Rundkantenseite des Flachprodukts kann ebenfalls beschichtet werden, wobei die Beschichtung der Rundkantenseite strukturiert wird, um die Lage der zu erzeugenden Kante zu beeinflussen. Insbesondere werden auf der Scharfkantenseite und der Rundkantenseite blanke Bereiche gelassen, an welchen der Ätzangriff stattfinden kann. Insbesondere wird der Kantenwinkel der Scharfkante und/oder der Kante auf der Rundseitenkante über die Strukturierung der Beschichtungen bestimmt. Dabei können die blanken Bereiche derart zueinander versetzt angeordnet sein, dass für die zu erzeugende Scharfkante ein spitzer Kantenwinkel vorgegeben wird.

Gemäß der Ausgestaltung der dritten Lehre der Erfindung umfasst das Verfahren weiter: Beschichten der Rundkantenseite des Flachprodukts zumindest teilweise mit einer ätzbaren Beschichtung vor der ätztechnischen Behandlung, wobei das Abrunden der mindestens einen Kante auf der Rundkantenseite mit dem Durchführen der ätztechnischen Behandlung des Flachprodukts bewirkt wird. Die ätzbare Beschichtung kann hierbei - im Gegensatz zu dem auf die Scharfkantenseite aufgebrachten ätzresistenten Fotolack - einen Ätzangriff auf das Flachprodukt zulassen. Beispielsweise ist die ätzbare Beschichtung dafür eingerichtet, dass ein Unterkriechen der ätzbaren Beschichtung während der ätztechnischen Behandlung stattfinden und beispielsweise das Ätzmittel in den Kontaktbereich von ätzbarer Beschichtung und Stahlwerkstoff des Flachprodukts zumindest teilweise eindringen kann. Ebenso kann die ätzbare Beschichtung zumindest teilweise durch das Ätzmittel abgelöst werden und/oder ein Diffundieren des Ätzmittels durch die ätzbare Beschichtung kann möglich sein. Entsprechend kann die mit der ätztechnischen Behandlung erzeugte Kante der Rundkantenseite einen (im Vergleich zur mindestens einen Scharfkante, welche an der mit dem ätzresistenten Fotolack beschichteten Scharfkantenseite entsteht) weitergehenden Ätzangriff ausgesetzt sein. Vorteilhafterweise wird somit das Abrunden der mindestens einen Kante auf der Rundkantenseite mit dem Durchführen der ätztechnischen Behandlung des Flachprodukts bewirkt, so dass ein separater (nachfolgender) Verfahrensschritt zum Abrunden entfallen oder vereinfacht werden kann.

In einer Ausgestaltung des Verfahrens umfasst die ätzbare Beschichtung einen ätzbaren Fotolack, womit beispielsweise eine Strukturierung über eine selektive Entwicklung, insbesondere über eine selektive Belichtung auf einfache Weise vorgenommen werden kann. Dementsprechend kann die Rundkantenseite ähnlich wie die Scharfkantenseite eine strukturierte Beschichtung erhalten, welche die Lage der (Rund-)Kanten bestimmt. Insbesondere kann eine ätzbare Beschichtung umfassend einen Trockenfotolack verwendet werden. Ein Trockenfotolack kann polymerbasiert sein und insbesondere fotoempfindliche Vernetzungsmittel umfassen. Trockenfotolacke lassen sich einfach handhaben und auftragen, beispielsweise über einen (heißen) Rollenauftrag, sind jedoch in der Haftbarkeit auf Flachprodukten eingeschränkt, so dass ein Unterkriechen des Trockenfotolacks bei der ätztechnischen Behandlung möglich sein kann. Weiter kann ein Flüssigresist verwendet werden, welcher eine geringe Haftung auf dem Flachprodukt aufweist.

Alternativ umfasst das Verfahren gemäß der ersten und zweiten Lehre der Erfindung weiter: Beschichten der Rundkantenseite des Flachprodukts des Flachprodukts zumindest teilweise mit einem ätzresistenten Fotolack. Entsprechend wird das Flachprodukt zumindest teilweise beidseitig mit dem ätzresistenten Fotolack beschichtet, wobei der ätzresistente Fotolack auch auf der Rundkantenseite strukturiert wird, etwa durch ein strukturiertes Beschichten und/oder durch eine selektive Entwicklung bzw. Belichtung. Damit wird - ähnlich wie bereits oben zur mindestens einen Scharfkante beschrieben - die mindestens eine Kante der Rundkantenseite durch die ätzresistenten Eigenschaften des Fotolacks insbesondere vor einem nennenswerten Unterkriechen geschützt. Prinzipiell können an der Scharfkantenseite und Rundkantenseite beidseitig scharfe Kanten entstehen, welche für ein Schneiden bzw. für ein Filtrieren geeignet sind. Vorzugsweise wird allerdings die mindestens eine Kante der Rundkantenseite einem Abrunden unterzogen.

Das Abrunden kann einerseits auch mit einer beidseitigen Beschichtung umfassend den ätzresistenten Fotolack gleichzeitig mit der ätztechnischen Behandlung erfolgen. In einer Ausgestaltung des Verfahrens nach der dritten Lehre weist das Flachprodukt auf der Rundkantenseite eine metallische Beschichtung aus einem im Vergleich zum Stahlwerkstoff chemisch unedleren Metallwerkstoff auf. Zur Unterscheidung zwischen edlen und unedlen Werkstoffen kann die elektrochemische Spannungsreihe herangezogen werden. Unedlere Werkstoffe weisen hierbei Redoxpaare mit niedrigeren Standardpotentialen auf bzw. edlere Werkstoffe weisen ein positiveres Standardpotential auf. Aufgrund der unedleren Eigenschaften der metallischen Beschichtung erfährt die metallische Beschichtung einen stärkeren Ätzangriff als der Stahlwerkstoff des Flachprodukts, so dass die mindestens eine Kante der Rundkantenseite einen größeren Kantenradius aufweist bzw. mit der ätztechnischen Behandlung entsteht mindestens eine Rundkante.

Die metallische Beschichtung weist beispielsweise Al, Zn, Sn und/oder deren Legierungen auf, welche im Vergleich zu typischen Stahlwerkstoffen unedlere chemische Eigenschaften haben und für eine Beschichtung von Stahlwerkstoffen geeignet sind. Die metallische Beschichtung wird insbesondere auf den Stahlwerkstoff plattiert, galvanisch aufgebracht, mittels chemischer Gasphasenabscheidung aufgebracht und/oder mittels physikalischer Gasphasenabscheidung aufgebracht. Die entsprechenden Verfahren ermöglichen eine besonders wirtschaftliche Herstellung des Flachprodukts mit einer metallischen Beschichtung.

Andererseits oder auch ergänzend zu einem Abrunden mit der ätztechnischen Behandlung kann ein Abrunden der mindestens einen Kante der Rundkantenseite mit einem weiteren Verfahrensschritt erfolgen. Der weitere Verfahrensschritt kann ein Maskieren der mindestens einen Scharfkante und insbesondere der Scharfkantenseite umfassen.

In einer Ausgestaltung des Verfahrens gemäß der ersten Lehre der Erfindung umfasst das Verfahren weiter: Maskieren der mindestens einen Scharfkante mit einer ätzresistenten Beschichtung nach der ätztechnischen Behandlung, wobei das Abrunden der mindestens einen Kante auf der Rundkantenseite eine weitere ätztechnische Behandlung umfasst. Die weitere ätztechnische Behandlung kann auf Basis von sauren und/oder alkalischen Ätzmitteln erfolgen, insbesondere auf Basis eines von der (ersten) ätztechnischen Behandlung verschiedenen Ätzmittels. In einer Ausgestaltung des Verfahrens kann jedoch auch das gleiche Ätzmittel verwendet werden. Wie bereits eingangs erwähnt, entsteht mit dem Ätzangriff an der (unbeschichteten) Rundkantenseite eine Abrundung der Kante, während die Scharfkante durch die Maskierung vor einem Ätzangriff geschützt wird und den Kantenradius im Wesentlichen beibehält.

Die ätzresistente Beschichtung zur Maskierung kann beispielsweise einen ätzresistenten Fotolack umfassen, insbesondere einen zur Beschichtung auf der Scharfkantenseite vor der (ersten) ätztechnischen Behandlung identischen Fotolack. Alternativ oder zusätzlich kann auch ein Wachs und/oder ein Trockenfotolack (z.B. mit geringer Kontaktzeit) verwendet werden, um die mindestens eine Scharfkante zu maskieren.

In einer weiteren beispielhaften Ausgestaltung des erfindungsgemäßen Verfahrens umfasst das Abrunden der mindestens einen Kante auf der Rundkantenseite ein mechanisches, elektrochemisches und/oder optisches Abtragen von Material. Mit entsprechenden abtragenden Verfahren kann insbesondere eine präzisere Geometrie für die mindestens eine (Rund-)Kante erhalten werden. Beispiele für abtragende Verfahren sind insbesondere Laserablation, Fräsen, Feilen, Schleifen, Beaufschlagen mit Strahlmitteln (z.B. Kugelstrahlen, Perlstrahlen, Sandstrahlen, Trockeneisstrahlen), elektrochemisches Abtragen, elektrochemisches Fräsen, Elektropolieren und/oder Plasmapolieren. Vorzugsweise wird die Scharfkantenseite bzw. zumindest die mindestens eine Scharfkante maskiert, um eine Einwirkung des abtragenden Verfahrens auf die Scharfkante zu unterbinden.

Unter einem Fotolack wird insbesondere ein Material zur Beschichtung verstanden, welches seine physikalischen Eigenschaften, z.B. die Löslichkeit in einem Solvent wie Wasser und/oder einem organischen, alkalischen und/oder sauren Lösungsmittel, unter Einwirkung von elektromagnetischer Strahlung verändert. Mit einer teilweisen Belichtung, beispielsweise über eine Vorlage, kann somit die z.B. die Löslichkeit der Beschichtung abschnittsweise verändert werden und durch eine teilweise Ablösung der Beschichtung eine strukturierte Entwicklung erreicht werden. Entsprechend umfasst in einer Ausgestaltung des Verfahrens das Entwickeln des ätzresistenten Fotolacks eine Belichtung, wobei insbesondere mit der Belichtung eine Strukturierung des ätzresistenten Fotolacks vorgenommen wird. Der ätzresistente Fotolack kann insbesondere ein wasserlöslicher Fotolack sein.

In einer weiteren beispielhaften Ausgestaltung des erfindungsgemäßen Verfahrens umfasst der ätzresistente Fotolack mindestens ein Polypeptid. Ätzresistente Fotolacke umfassend mindestens ein Polypeptid, insbesondere mindestens ein Protein, können besonders vorteilhafte Hafteigenschaften auf Stahlwerkstoffen sowie eine hohe Ätzresistenz aufweisen. Vorzugsweise umfasst der ätzresistente Fotolack mindestens ein Kaseinat.

In einer weiteren beispielhaften Ausgestaltung des erfindungsgemäßen Verfahrens umfasst der ätzresistente Fotolack mindestens ein Oxidationsmittel. Ein Oxidationsmittel kann bereits mit dem Aufbringen der Beschichtung im ätzresistenten Fotolack enthalten sein und/oder nach dem Aufbringen der Beschichtung eingebracht werden. Das mindestens eine Oxidationsmittel kann für ein Aktivieren und/oder Vernetzen des ätzresistenten Fotolacks eingerichtet sein. Ein Vernetzen des ätzresistenten Fotolacks kann bereits durch Zugabe des mindestens einen Oxidationsmittels erfolgen. Vorzugsweise erfolgt jedoch eine photochemische Vernetzung im Zusammenhang mit dem mindestens einen Oxidationsmittel durch eine Belichtung bzw. eine Entwicklung des ätzresistenten Fotolacks.

Geeignet als Oxidationsmittel sind insbesondere wasserlösliche Salze. Hierbei kann das mindestens eine Oxidationsmittel mindestens eines ausgewählt aus Cr(VI)-Salzen, Mn(VII)-Salzen und Fe (III)-Salzen umfassen. Bevorzugt werden Cr(VI)-Salze verwendet und weiter beispielsweise mit mindestens einem Kaseinat kombiniert, da Cr(VI)-Salze eine besonders effektive Vernetzung bewirken. Entsprechend kann eine hohe Ätzresistenz und damit auch verbesserte Auflösung und Scharfkantengeometrie erreicht werden.

In einer weiteren beispielhaften Ausgestaltung des erfindungsgemäßen Verfahrens wird der ätzresistente Fotolack mit einer Schichtdicke von 0,5 µm bis 10 µm aufgebracht, womit die Auflösung bzw. Abbildungstreue der Beschichtung weiter erhöht wird. Insbesondere die bereits erwähnten ätzresistenten Fotolacke umfassend mindestens ein Polypeptid und Oxidationsmittel erlauben entsprechend dünne Schichtdicken bei gleichzeitig hoher Ätzresistenz. Wird der ätzresistente Fotolack mit einer Schichtdicke von 0,5 µm bis 6 µm aufgebracht, kann die Scharfkantengeometrie und Abbildungstreue noch weiter verbessert werden.

In einer nächsten beispielhaften Ausgestaltung des erfindungsgemäßen Verfahrens weist das Flachprodukt eine Dicke von 0,01 mm bis 1,0 mm auf. Entsprechende Dicken sind insbesondere für eine ätztechnische Behandlung des Flachprodukts und gleichzeitig für die Herstellung von Schneiden, beispielsweise Klingen, Nadelspitzen und Folien wie Scherfolien, sowie von Filtern geeignet. Insbesondere Flachprodukte aufweisend eine Dicke von 0,025 mm bis 0,4 mm ermöglichen eine effektive Herstellung von Schneiden mit dem erfindungsgemäßen Verfahren, wobei die ätztechnische Behandlung auch am Band (z.B. von Rolle zu Rolle) durchgeführt werden kann. Zur Herstellung von Filtern beträgt die Dicke des Flachprodukts bevorzugt 0,02 mm bis 0,4 mm.

In einer weiteren beispielhaften Ausgestaltung des erfindungsgemäßen Verfahrens wird die ätztechnische Behandlung mit einer sauren Lösung durchgeführt. Geeignete Lösungen sind insbesondere Eisenchloridlösungen und/oder Kupferchloridlösungen, z.B. wässrige Eisenchloridlösungen und/oder wässrige Kupferchloridlösungen. Hiermit werden hohe Ätzraten in Stahlwerkstoffen erreicht, wobei gleichzeitig der Ätzangriff in Verbindung mit dem ätzresistenten Fotolack eine für das Erzeugen von Scharfkanten vorteilhafte Kantengeometrie ausbildet. Die bereits erwähnten ätzresistenten Fotolacke insbesondere umfassend mindestens ein Polypeptid und Oxidationsmittel können auch im Gegensatz zum Stahlwerkstoff eine hohe Ätzresistenz gegenüber diesen sauren Lösungen aufweisen.

In einer weiteren beispielhaften Ausgestaltung des erfindungsgemäßen Verfahrens wird mit der ätztechnischen Behandlung des Flachprodukts an der Kante der Rundkantenseite eine Hinterätzung erzeugt, wobei hierdurch eine vorteilhafte Kantengeometrie erreicht werden kann. Eine Hinterätzung bewirkt insbesondere einen spitzen Kantenwinkel, wobei durch den ätzresistenten Fotolack ein geringer Kantenradius erreicht wird. Durch die Hinterätzung lässt sich die Kante der Rundkantenseite auf effektive Weise abrunden. Insbesondere liegt an der Rundkantenseite eine Hinterätzung mit einer Länge von 5 µm bis 15 µm vor, was das Abrunden der Kante an der Rundkantenseite insbesondere in einem weiteren Verfahrensschritt erleichtert.

In den beschriebenen ätztechnischen Behandlungen von Flachprodukten zur Herstellung von Schneiden aus einem Stahlwerkstoff wird ein ätzresistenter Fotolack verwendet. Der ätzresistente Fotolack ermöglicht die Ausbildung von Kanten mit einem Kantenradius, welcher für eine Ausbildung einer Scharfkante ausreichend klein ist und damit die Herstellung einer Schneide aus einem Stahlwerkstoff mit ätztechnischen Mitteln. Hierbei lässt sich der ätzresistente Fotolack auch für verschiedene Schneidengeometrien auf einfache Weise strukturieren, beispielsweise durch eine selektive Belichtung und Entwicklung. Insbesondere weist die Verwendung eine oder mehrere Merkmale des Verfahrens gemäß der ersten Lehre auf bzw. die Verwendung erfolgt in einem Verfahren gemäß der ersten Lehre.

Schneiden aus einem Stahlwerkstoff mit mindestens einer Scharfkante an einer Scharfkantenseite und mit mindestens einer der mindestens einen Scharfkante gegenüberliegenden Rundkante an einer Rundkantenseite, wie diese mit dem Verfahren gemäß der ersten Lehre bzw. der Verwendung gemäß der zweiten Lehre erhalten werden können, weisen hierbei die gleichen Vorteile auf wie galvanisch hergestellte Schneiden aus Nickelwerkstoffen, bieten jedoch eine höhere Verträglichkeit. Die Rundkantenseite der Schneide ermöglicht ein schonendes Gleiten der Schneide über die Haut, wobei durch die Abrundung der Rundkanten Hautirritationen vermieden werden. Die Scharfkantenseite ermöglicht gleichzeitig eine hohe Schneidfähigkeit mit den Scharfkanten.

Erfindungsgemäß weist die mindestens eine Scharfkante einen Kantenradius von 0,5 µm bis 5 µm auf. Beispielsweise wird zur Bestimmung des Kantenradius ein Querschnitt zur Kante vorgenommen (d.h. senkrecht zur Erstreckungsrichtung der Kante) und eine Kreisform an den Querschnitt der Kante angepasst, z.B. numerisch gefittet. Der Kantenradius kann dann gleich dem Radius der angepassten Kreisform sein. Die Obergrenze von 5 µm ermöglicht einerseits eine hohe Schneidfähigkeit, während die Untergrenze von 0,5 µm eine ausreichende mechanische Stabilität und damit Langlebigkeit der Scharfkante gewährleistet. Die Schneidfähigkeit und Stabilität kann weiter mit einem Kantenradius von 0,5 µm bis 2 µm optimiert werden.

Alternativ oder kumulativ weist die Rundkante bzw. Kante der Rundkantenseite erfindungsgemäß einen Kantenradius von 0,01 mm bis 0,5 mm auf, um beispielsweise für Anwendungen wie zur Rasur eine gute Gleitfähigkeit bereitzustellen. Entsprechende Kantenradien lassen sich auch durch die bereits erwähnten Mittel zum Abrunden der Kante der Rundkantenseite effektiv erreichen. Die Form der Rundkante kann mit einem Kantenradius von 0,05 mm bis 0,2 mm weiter verbessert werden. Insbesondere ein Kantenradius von 0,1 mm kann für Anwendungen als Rasierschneide, beispielsweise in Scherfolien vorteilhaft sein.

In Ausgestaltungen der Erfindung ist die Schneide gemäß der dritten Lehre bzw. die durch das Verfahren gemäß der ersten Lehre hergestellte Schneide als Klinge, Nadelspitze, (Rasier-)Messer, Skalpell oder Scherfolie ausgebildet, wodurch die erfindungsgemäße Geometrie der Scharfkante und der (Rund-)Kante vorteilhaft genutzt werden kann.

Der Filter gemäß der vierten Lehre der Erfindung weist mindestens eine Durchgangsöffnung auf, welche zum Durchlass eines Filtrats geeignet ist, wobei das Filtrat von weiteren abzufiltrierenden Stoffen getrennt werden kann. Eine minimale Dimension der mindestens einen Durchgangsöffnung kann hierbei 0,020 mm betragen und insbesondere anhand der Materialstärke des Filters gewählt werden. Die mindestens eine Durchgangsöffnung weist beispielsweise die Form eines Rundlochs, eines Schlitzes, oder Freiformen wie Winkel auf. Kombinationen verschiedener Formen von Durchgangsöffnungen in einem Filter sind ebenso möglich.

Beispielsweise ist der Filter als Kaffeefilter ausgestaltet. Geeignete Materialstärken hierfür sind 0,02 - 0,1 mm, insbesondere 0,05 mm. Bei Kaffeefiltern sind Durchgangsöffnungen mit einem konischen Querschnitt vorteilhaft, wobei von der Scharfkantenseite her gefiltert wird, um das Kaffeepulver nach der Extraktion leichter entfernen zu können. Der Durchmesser der Durchgangsöffnung auf der Scharfkantenseite beträgt insbesondere 0,04 - 0,06 mm und beispielsweise 0,055 mm. Der Durchmesser der Durchgangsöffnungen auf der Rundkantenseite ist hierbei aufgrund des konischen Querschnitts größer und beträgt insbesondere 0,07 - 0,11 mm und beispielsweise 0,09 mm. Die großen Durchmesser auf der Rundkantenseite verhindern ein Ansammeln von Zwickelflüssigkeit in den Durchgangsöffnungen, welche nach einem Antrocknen schwer zu entfernen ist. Die Durchgangsöffnungen können in einem mittleren Abstand von etwa 0,165 mm angeordnet sein. Die Transmission von als Kaffeefiltern ausgestalteten Filtern beträgt insbesondere 5 % bis 30 % und beispielsweise 10 %.

Ebenso kann der Filter als Teefilter ausgestaltet sein, wobei insbesondere Materialstärken von 0,05 - 0,15 mm und beispielsweise 0,1 mm vorgesehen sind. Die Durchgangsöffnungen sind bevorzugt als Schlitze mit konischen Querschnitten ausgestaltet und weisen eine Schlitzbreite von 0,05 mm bis 0,15 mm und beispielsweise 0,1 mm auf der Scharfkantenseite auf. Die Schlitzbreite auf der Rundkantenseite kann 0,1 bis 0,2 mm und beispielsweise 0,15 mm betragen. Der Schlitzbreitenabstand beträgt insbesondere 0,1 mm. Die Transmission von als Teefiltern ausgestalteten Filtern beträgt insbesondere 10 % bis 40 % und beispielsweise 14 %.

Der Filter kann als Stärkesieb ausgebildet sein, wobei Materialstärken von 0,1 mm bis 0,3 mm vorgesehen sind. Die Durchgangsöffnungen sind bevorzugt als Rundlöcher und/oder Schlitze mit konischen Querschnitten ausgestaltet und weisen einen Durchmesser/eine Schlitzbreite von 0,06 mm bis 0,2 mm auf der Scharfkantenseite auf. Der Durchmesser/die Schlitzbreite auf der Rundkantenseite kann 0,15 mm bis 0,4 mm betragen. Der Lochabstand bzw. Schlitzbreitenabstand beträgt insbesondere 0,1 mm bis 0,6 mm. Die Transmission von als Stärkefiltern ausgestalteten Filtern beträgt insbesondere 5 % bis 70 %.

Weiter kann der Filter als Fasersieb ausgestaltet sein und beispielsweise für die Verwendung in der Hygieneartikelproduktion vorgesehen sein. Hierbei können Materialstärken von 0,2 mm bis 0,3 mm und Lochdurchmesser von 0,25 mm bis 0,4 mm auf der Scharfkantenseite vorgesehen sein. Der Lochdurchmesser auf der Rundkantenseite kann 0,37 mm bis 0,45 mm betragen. Der Lochabstand beträgt insbesondere 0,4 mm bis 0,5 mm. Die Transmission beträgt insbesondere 20 % bis 50 %.

Wie zuvor zur erfindungsgemäßen Schneide beschrieben, weist auch in Bezug auf den erfindungsgemäßen Filter die mindestens eine Scharfkante erfindungsgemäß einen Kantenradius von 1 µm bis 5 µm, insbesondere von 1 µm bis 2 µm auf. Die Rundkante weist erfindungsgemäß alternativ oder kumulativ einen Kantenradius von 0,01 mm bis 0,5 mm auf, insbesondere von 0,05 mm bis 0,2 mm.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Lehren offenbart verstanden werden. Insbesondere sollen durch die vorherige oder folgende Beschreibung von Verfahrensschritten gemäß bevorzugter Ausführungsformen eines Verfahrens auch entsprechende Merkmale der Schneide gemäß der dritten Lehre offenbart sein. Ebenfalls soll durch die Offenbarung von Merkmalen der Schneide gemäß der dritten Lehre auch entsprechende Verfahrensschritte zur Herstellung gemäß der ersten Lehre offenbart sein.

Weitere Ausgestaltungen und Vorteile der Erfindung sind in der folgenden detaillierten Beschreibung einiger beispielhafter Ausführungsformen der vorliegenden Erfindung, insbesondere in Verbindung mit der Zeichnung, zu entnehmen. Die Zeichnung zeigt in
- Fig. 1: eine schematische Darstellung einer Schneide aus Stahlwerkstoff in einer Schnittdarstellung;
- Fig. 2: eine schematische Darstellung einer weiteren Schneide aus Stahlwerkstoff in einer Schnittdarstellung;
- Fig. 3a-d: eine schematische Darstellung eines ersten Ausführungsbeispiels des erfindungsgemäßen Verfahrens und der erfindungsgemäßen Schneide in einer Schnittdarstellung;
- Fig. 4a-e: eine schematische Darstellung eines weiteren Ausführungsbeispiels des erfindungsgemäßen Verfahrens und der erfindungsgemäßen Schneide in einer Schnittdarstellung;
- Fig. 5a-g: eine schematische Darstellung eines weiteren Ausführungsbeispiels des erfindungsgemäßen Verfahrens und der erfindungsgemäßen Schneide in einer Schnittdarstellung;
- Fig. 6a-e: verschiedene Ausführungsformen von Scharfkantengeometrien insbesondere für Schneiden; und
- Fig. 7: ein Ausführungsbeispiel eines erfindungsgemäßen Filters aus einem Stahlwerkstoff.

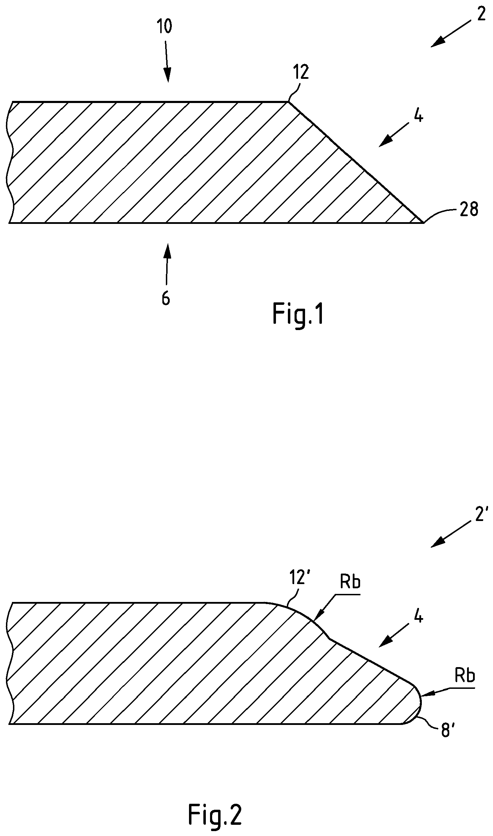

Fig. 1 zeigt eine schematische Darstellung einer Schneide 2 aus Stahlwerkstoff in einer Schnittdarstellung. Die Schneide 2 ist hierbei durch Verfahren aus dem Stand der Technik hergestellt. Hierzu wird ein Rohling aus einem Flachprodukt aus Stahlwerkstoff ausgestanzt und optional in Form gebogen. Die Herstellung der Schneide 2 erfolgt über ein Schleifen des Rohlings.

Wie in Fig. 1 zu erkennen, wird eine Seite 4 der Klinge mit einem Winkel zu einer Oberflächennormalen geschliffen, wobei auf einer Seite 6 der Schneide 2 eine scharfe Scharfkante 8 mit einem spitzen Kantenwinkel entsteht. Auf der gegenüberliegenden Seite 10 wird weiter eine Kante 12 mit stumpfem Kantenwinkel erzeugt.

Über einen Schleifvorgang lassen sich zwar prinzipiell geringe Kantenradien und damit als Schneidkanten ausgebildete Scharfkanten 8 erreichen, jedoch weist die Kante 12 mit stumpfem Winkel typischerweise ebenso wie die Scharfkante 8 einen kleinen Kantenradius auf. Die der Scharfkante 8 gegenüberliegende Kante 12 kann daher beispielsweise bei einer Verwendung der Schneide 2 zum Rasieren Hautirritationen verursachen. Daher ist es wünschenswert, die Ausgestaltung von Schneiden aus Stahlwerkstoffen weiter zu verbessern.

Alternativ zu einem Schleifen ist eine Herstellung von Schneiden 2' aus Stahlwerkstoff über eine ätztechnische Behandlung möglich. Über die aus dem Stand der Technik bekannten ätztechnischen Methoden werden jedoch, wie in Fig. 2 schematisch in einer Schnittdarstellung gezeigt, Kanten 8`, 12' mit jeweils einem vergleichsweise großen Kantenradius Ra, Rb ausgebildet. Entsprechende Schneiden 2' eignen sich zwar typischerweise für ein Gleiten über die Haut, sind allerdings in der Schneidfähigkeit durch den großen Kantenradius Ra an der Kante 8' beschränkt.

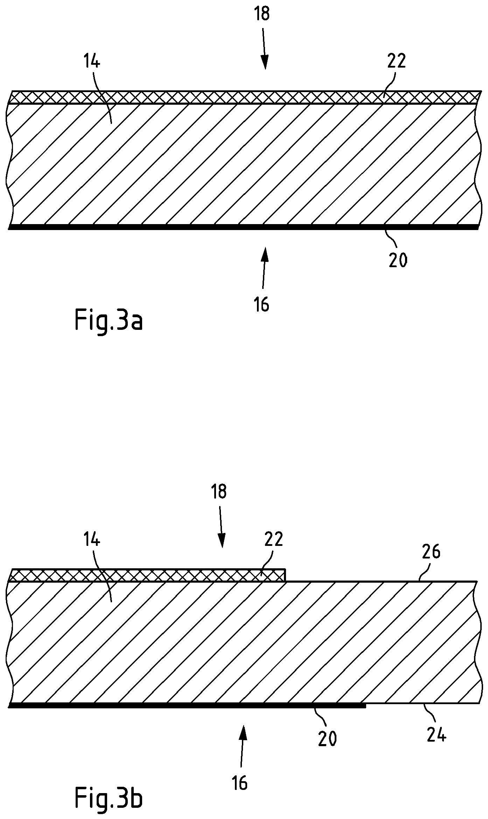

Fig. 3a-d zeigen eine schematische Darstellung eines ersten Ausführungsbeispiels des erfindungsgemäßen Verfahrens. In Fig. 3a ist in einer Schnittdarstellung ein aus einem Stahlwerkstoff bereitgestelltes Flachprodukt 14 gezeigt. Zumindest für einen Abschnitt des Flachprodukts 14 wird eine Seite des Flachprodukts 14 als Scharfkantenseite 16 und die der Scharfkantenseite 16 gegenüberliegende Seite als Rundkantenseite 18 ausgewählt. Die Dicke des Flachprodukts, d.h. der Abstand von Scharfkantenseite 16 und Rundkantenseite 18 beträgt von 0,01 mm bis 1,0 mm, insbesondere von 0,025 mm bis 0,4 mm.

Ein Beschichten der Scharfkantenseite 16 des Flachprodukts 14 mit einem ätzresistenten Fotolack 20 wird vorgenommen. Der ätzresistente Fotolack 20 umfasst mindestens ein Polypeptid und mindestens ein Oxidationsmittel umfassend mindestens eines ausgewählt aus Cr(VI)-Salzen, Mn(VII)-Salzen und Fe (III)-Salzen.

Der ätzresistente Fotolack 20 ist in diesem Ausführungsbeispiel ein wasserlöslicher proteinatbasierter Fotolack 20 mit einem Kaseinat und Cr(VI)-Salz als Oxidationsmittel. Der ätzresistente Fotolack 20 ermöglicht hierbei eine hochreaktive, empfindliche fotochemische Vernetzung und eine sehr gute Haftung auf der Oberfläche des Stahlwerkstoffs des Flachprodukts 14 auch unabhängig von Oberflächenrauigkeiten und Oberflächentextur. Zudem kann der ätzresistente Fotolack 20 mit sehr geringen Schichtdicken von 0,5 µm bis 10 µm, insbesondere mit einer Schichtdicke von 0,5 µm bis 6 µm aufgebracht werden, was eine hohe Abbildungstreue durch eine geringe Parallaxe bzw. Unterstrahlungsfehler bei der ätztechnischen Behandlung ermöglicht. Der ätzresistente Fotolack 20 ist weiter sehr widerstandsfähig gegenüber sauren Ätzmitteln und insbesondere gegenüber Eisenchloridlösungen und Kupferchloridlösungen, wodurch die vom ätzresistenten Fotolack 20 abgedeckte Oberfläche des Flachprodukts 14 vor einem Ätzangriff geschützt wird. Auch wird ein Unterkriechen des ätzresistenten Fotolacks 20 durch ein Ätzmittel aufgrund der hohen Haftfähigkeit unterbunden.

In diesem Ausführungsbeispiel wird die Rundkantenseite 18 mit einem einer ätzbaren Beschichtung 22 beschichtet. Die ätzbare Beschichtung 22 umfasst einen ätzbaren Trockenfotolack, beispielsweise einen Trockenresist, oder auch einen Flüssigresist mit geringer Haftung. Die ätzbare Beschichtung 22 weist eine deutlich geringere Ätzresistenz auf als der ätzresistente Fotolack 20 und ermöglicht auch ein Unterkriechen durch ein Ätzmittel.

Der ätzresistente Fotolack 20 und die ätzbare Beschichtung 22 werden entwickelt, wobei die Beschichtungen selektiv belichtet werden, um die Löslichkeit des ätzresistenten Fotolacks 20 und der ätzbaren Beschichtung 22 abschnittsweise zu beeinflussen. Nach einer anschließenden Behandlung mit einem wässrigen, organischen, alkalischen und/oder sauren Lösungsmittel verbleibt wie in Fig. 3b gezeigt eine Strukturierung des ätzresistenten Fotolacks 20 und der ätzbaren Beschichtung 22, wobei blanke Bereiche 24, 26 bzw. Ausnehmungen an der Scharfkantenseite 16 und der Rundkantenseite 18 entstehen, in welchen die Beschichtungen abgelöst wurden.

Eine ätztechnische Behandlung des Flachprodukts 14 wird durchgeführt. Hierbei wird das strukturiert beschichtete Flachprodukt 14 einer sauren Lösung umfassend Eisenchlorid oder Kupferchlorid ausgesetzt. Der Ätzangriff an den blanken Bereichen 24, 26 reicht hierbei durch die Dicke des Flachprodukts 14 und erzeugt entsprechend Ausnehmungen im Flachprodukt 14.

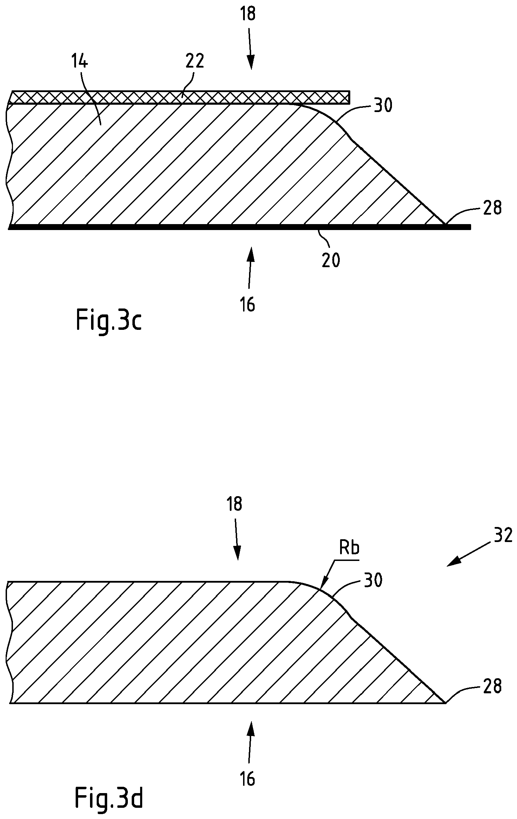

Die mit dem ätzresistenten Fotolack 20 beschichteten Abschnitte der Scharfkantenseite 16 erfahren jedoch im Wesentlichen keinen oder nur einen geringen Ätzangriff, wobei auch ein Unterkriechen des ätzresistenten Fotolacks 20 unterbunden wird. Folglich wird wie in Fig. 3c gezeigt eine Scharfkante 28 an der Scharfkantenseite 16 erzeugt.

Die ätzbare Beschichtung 22 auf der Rundkantenseite 18 erlaubt dagegen einen begrenzten Ätzangriff und auch ein Unterkriechen der ätzbaren Beschichtung 22. Damit wird eine der Scharfkante 28 gegenüberliegende Kante 30 an der Rundkantenseite 18 erzeugt.

Insbesondere durch das Unterkriechen der ätzbaren Beschichtung 22 erfolgt ein Abrunden der Kante 30 auf der Rundkantenseite 18, wobei das Abrunden mit dem Durchführen der ätztechnischen Behandlung des Flachprodukts 14 bewirkt wird. Entsprechend wird die Kante 30 als Rundkante ausgebildet.

Fig. 3d zeigt weiter die hergestellte Schneide 32, nachdem der verbliebene ätzresistente Fotolack 20 und die verbliebene ätzbare Beschichtung 22 entfernt wurden, beispielsweise mit einem alkalischen Lösungsmittel. Die Schneide 32 weist die Scharfkante 28 an der Scharfkantenseite 16 und die der Scharfkante 28 gegenüberliegende (Rund-)Kante 30 an der Rundkantenseite 18 auf. Die Scharfkante kann hierbei einen Kantenradius von 0,5 µm bis 5 µm, insbesondere von 0,5 µm bis 2 µm aufweisen und/oder die Rundkante kann einen Kantenradius von 0,01 mm bis 0,5 mm, insbesondere von 0,05 mm bis 0,2 mm aufweisen.

Die Rundkantenseite 18 der Schneide 32 ermöglicht beispielsweise bei einer Anwendung zum Rasieren ein schonendes Gleiten der Schneide 32 über die Haut, wobei durch die Abrundung der Kante 30 Hautirritationen vermieden werden. Die Scharfkantenseite 16 stellt gleichzeitig eine hohe Schneidfähigkeit aufgrund der Ausbildung der Scharfkanten 28 mit geringem Kantenradius bereit.

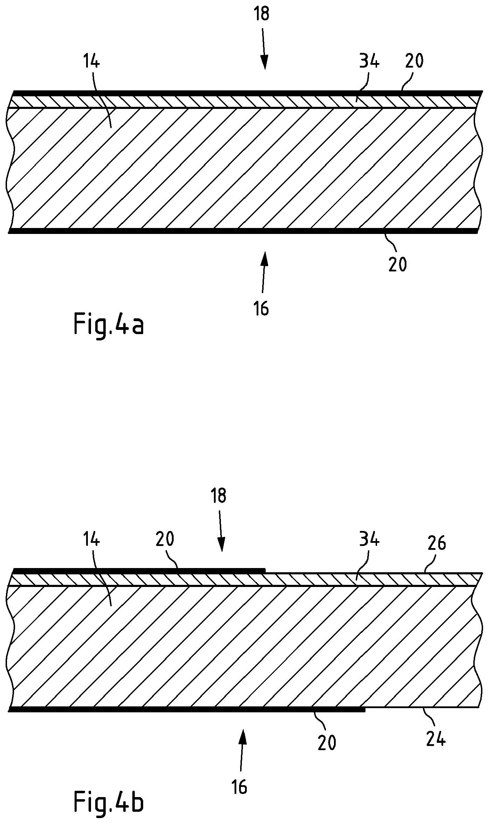

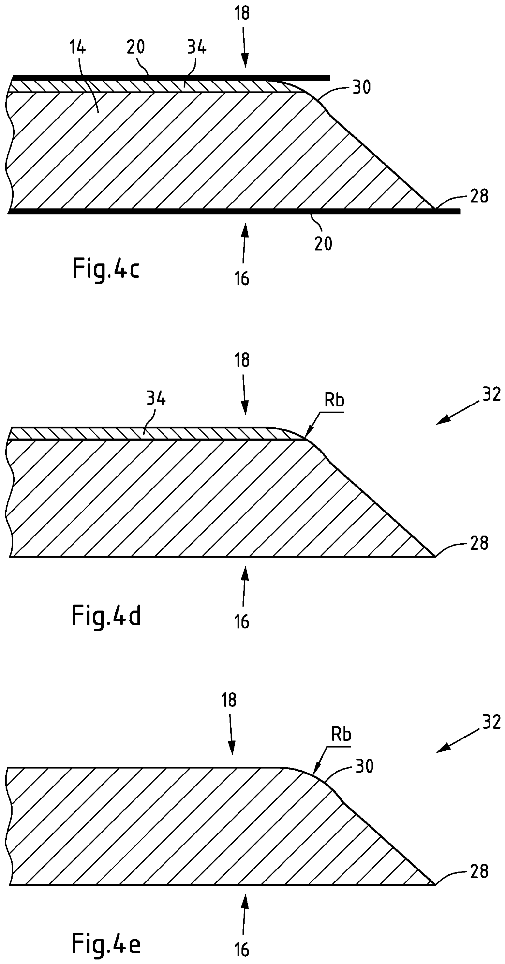

Fig. 4a-e zeigen ein weiteres Ausführungsbeispiel des erfindungsgemäßen Verfahrens. In Fig. 4a ist ein bereitgestelltes Flachprodukt 14 aus einem Stahlwerkstoff in einer Schnittansicht dargestellt, wobei auf der Rundkantenseite 18 des Flachprodukts 14 eine metallische Beschichtung 34 aus einem im Vergleich zum Stahlwerkstoff chemisch unedleren Metallwerkstoff angeordnet ist, beispielsweise aus Legierungen auf Basis von Al, Zn oder Sn. Die metallische Beschichtung 34 wird auf den Stahlwerkstoff plattiert, galvanisch aufgebracht, mittels chemischer Gasphasenabscheidung aufgebracht und/oder mittels physikalischer Gasphasenabscheidung aufgebracht.

Sowohl die Scharfkantenseite 16 als auch die Rundkantenseite 18 des Flachprodukts 14 werden mit einem ätzresistenten Fotolack 20 beschichtet. Wie bereits im Zusammenhang mit Fig. 3b beschrieben, werden die Beschichtungen aus dem ätzresistenten Fotolack 20 selektiv belichtet und strukturiert bzw. entwickelt. In Fig. 4b sind entsprechende blanke Bereiche 24, 26 auf der Scharfkantenseite 16 und der Rundkantenseite 18 dargestellt.

Eine ätztechnische Behandlung des Flachprodukts 14 wird durchgeführt, indem das Flachprodukt 14 einer sauren Lösung umfassend Eisenchlorid oder Kupferchlorid ausgesetzt wird. Der ätzresistente Fotolack 20 auf der Scharfkantenseite 16 unterbindet im Wesentlichen ein Unterkriechen durch die saure Lösung. Auf der Rundkantenseite 18 wird jedoch die metallische Beschichtung 34 aufgrund der unedleren Eigenschaften stärker durch die saure Lösung angegriffen als der Stahlwerkstoff, so dass dort ein weitergehender Ätzangriff stattfindet. Entsprechend werden eine Scharfkante 28 an der Scharfkantenseite 16 mit einem geringen Kantenradius sowie aufgrund der Eigenschaften der metallischen Beschichtung 34 eine (Rund-)Kante 30 an der Rundkantenseite 18 erzeugt.

Nach einem Entfernen des ätzresistenten Fotolacks 20 wird wie in Fig. 4d gezeigt eine Schneide 32 erhalten. In einem weiteren Verfahrensschritt kann der Stahlwerkstoff von der chemisch unedleren metallischen Beschichtung 34 befreit werden, womit entsprechend Fig. 4e eine Schneide 32 bestehend aus dem Stahlwerkstoff erhalten wird, welche beispielsweise als Klinge oder Scherfolie verwendet werden kann.

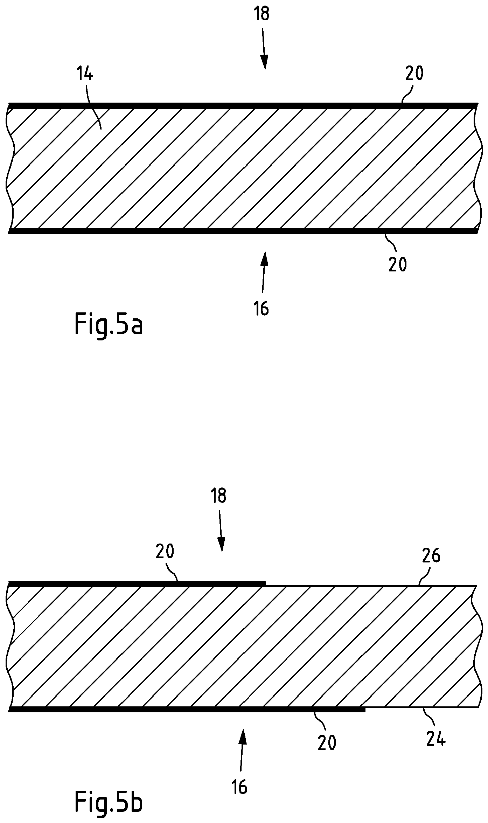

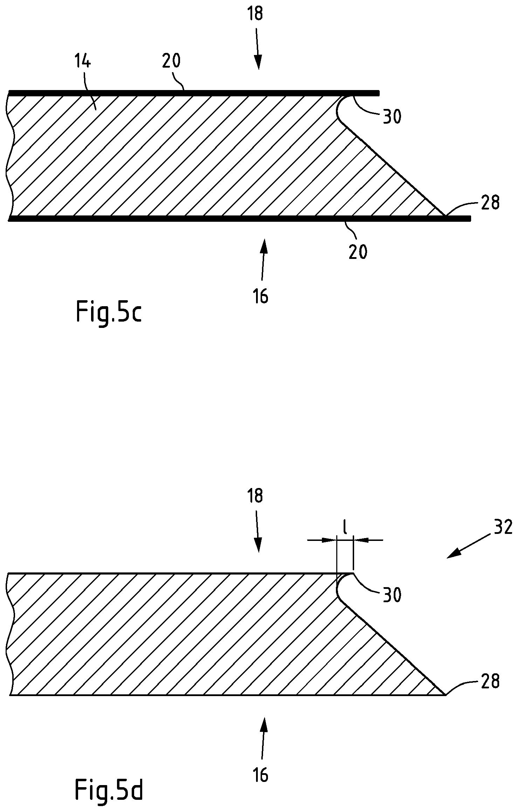

Fig. 5a-g zeigen ein weiteres Ausführungsbeispiel des erfindungsgemäßen Verfahrens. In Fig. 5a ist ein bereitgestelltes Flachprodukt 14 aus einem Stahlwerkstoff in einer Schnittansicht dargestellt, wobei sowohl die Scharfkantenseite 16 als auch die Rundkantenseite 18 des Flachprodukts 14 mit einem ätzresistenten Fotolack 20 beschichtet sind.

Der ätzresistente Fotolack 20 wird beidseitig entwickelt bzw. strukturiert, so dass blanke Bereiche 24, 26 auf der Scharfkantenseite 16 und Rundkantenseite 18 entstehen (Fig. 5b). Die blanken Bereich 24, 26 sind zueinander versetzt angeordnet, so dass für die zu erzeugende Scharfkante 28 ein spitzer Kantenwinkel vorgegeben wird.

Mit einer ätztechnischen Behandlung des Flachprodukts 14 werden entsprechend Fig. 5c eine Scharfkante 28 und eine Kante 30 erzeugt. Der ätzresistente Fotolack 20 unterbindet im Wesentlichen ein Unterkriechen durch die saure Lösung auf der Scharfkantenseite 16 und der Rundkantenseite 18.

Nach einem Entfernen des ätzresistenten Fotolacks 20 verbleibt somit eine Schneide 32, welche auf der Scharfkantenseite 16 eine Scharfkante 28 und auf der Rundkantenseite 18 eine Kante 30 aufweist. Sowohl die Scharfkante 28 als auch die Kante 30 weisen aufgrund der erfolgten Abdeckung mit dem ätzresistenten Fotolack 20 einen geringen Kantenradius auf. Mit der ätztechnischen Behandlung des Flachprodukts 14 wird an der Kante 30 der Rundkantenseite 18 eine Hinterätzung erzeugt, wobei die Hinterätzung eine Länge *l* von 5 µm bis 15 µm aufweist.

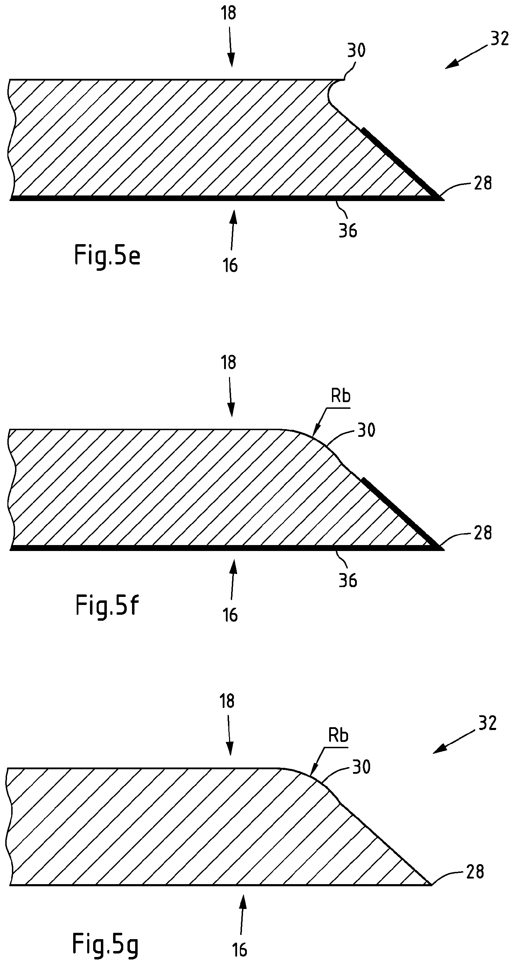

Die Schneide 32 kann weiter einem einseitigen Abrunden der Kante 30 unterzogen werden. Hierzu wird zunächst wie in Fig. 5e gezeigt ein Maskieren der Scharfkante 28 und der Scharfkantenseite 16 mit einer Beschichtung 36 vorgenommen.

Das Abrunden der Kante 30 auf der Rundkantenseite 18 kann hierbei eine weitere ätztechnische Behandlung umfassen. Die Beschichtung 36 wird dann als ätzresistente Beschichtung aufgebracht und umfasst beispielsweise einen ätzresistenten Fotolack und/oder Wachs, so dass die Scharfkante 28 vor einem Ätzangriff geschützt wird. Mit einer ätztechnischen Behandlung, beispielsweise ebenfalls mittels einer sauren Lösung, wird die Kante 30 aufgrund des Ätzangriffs abgerundet (Fig. 5f). Die Beschichtung 36 kann anschließend entfernt werden, womit wie in Fig. 5g gezeigt die Schneide 32 bestehend aus dem Stahlwerkstoff als Produkt verbleibt.

Alternativ kann das Abrunden der Kante 30 auf der Rundkantenseite 18 ein mechanisches, elektrochemisches und/oder optisches Abtragen von Material umfassen, insbesondere über Laserablation, Fräsen, Schleifen, Strahlmittel, elektrochemischem Abtragen, elektrochemischem Fräsen, Elektropolieren und/oder Plasmapolieren. Die Beschichtung 36 kann hier ebenfalls die Scharfkante 28 vor einem Materialabtrag schützen und anschließend entfernt werden.

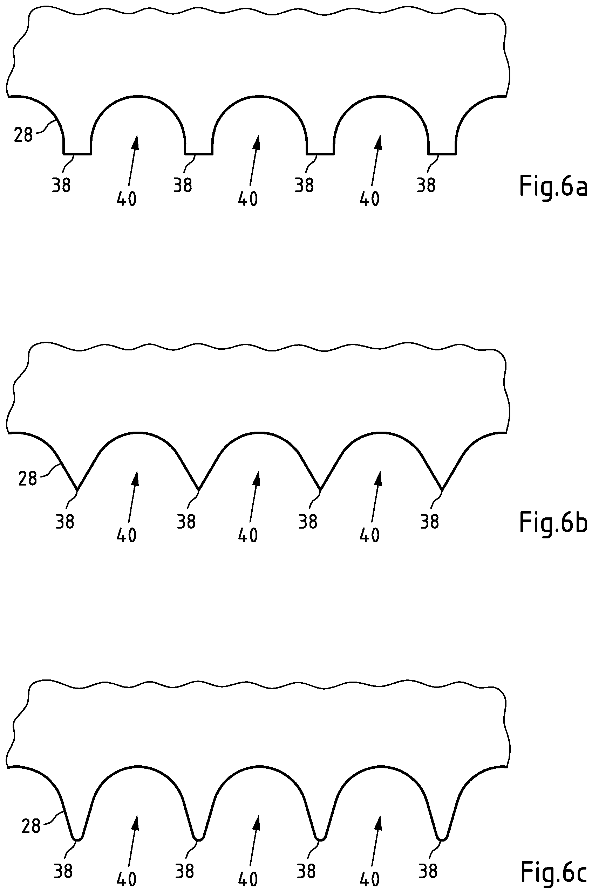

Fig. 6a-e zeigen in Draufsichten verschiedene Ausführungsformen von Scharfkantengeometrien insbesondere für Schneiden, welche mit dem erfindungsgemäßen Verfahren erhalten werden können. Da mit dem erfindungsgemäßen Verfahren der Kantenverlauf durch die Strukturierung des ätzresistenten Fotolacks und beispielsweise durch eine selektive Belichtung vorgegeben werden kann, ist prinzipiell ein Freiformen des Kantenverlaufs möglich.

Fig. 6a-c zeigen einen Kantenverlauf mit Schneidzähnen 38, welche durch bogenförmige Ausnehmungen 40 gebildet sind. Die bogenförmigen Ausnehmungen 40 weisen in den Fig. 6a-c jeweils verschiedene Abmessungen auf, so dass verschiedene Formen der Schneidzähne 38 entstehen. Die Schneidzähne 38 aus Fig. 6a weisen hierbei einen geraden Schneidkantenabschnitt auf. Im Ausführungsbeispiel aus Fig. 6b sind die Schneidzähne 38 spitz ausgebildet. Dagegen sind die Schneidzähne 38 aus dem Ausführungsbeispiel in Fig. 6c abgerundet ausgeführt.

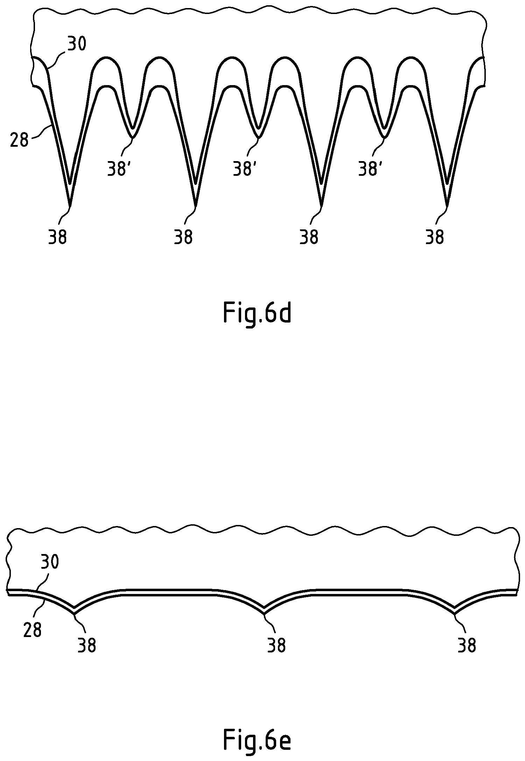

Fig. 6d und 6e zeigen einen Kantenverlauf mit näherungsweise dreieckigen Schneidzähnen 38, 38'. Im Ausführungsbeispiel aus Fig. 6d sind zwei verschiedene Schneidzahngeometrien mit längeren Schneidzähnen 38 und kürzeren Schneidzähnen 38' vorgesehen, welche abwechselnd entlang der Scharfkante 28 angeordnet sind. Fig. 6e zeigt ein Ausführungsbeispiel mit näherungsweise dreieckigen Schneidzähnen 38 mit einem stumpferen Dreieckswinkel.

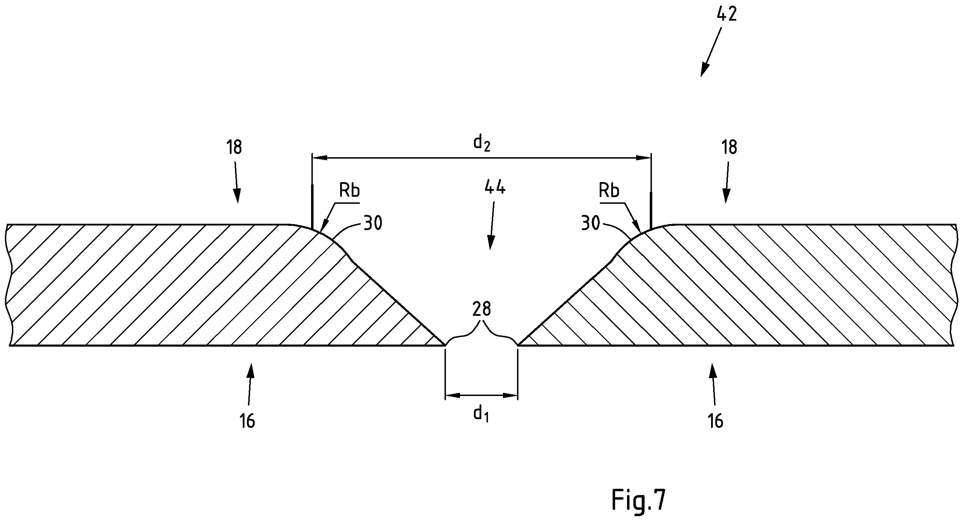

Fig. 7 zeigt ein Ausführungsbeispiel eines erfindungsgemäßen Filters 42 aus einem Stahlwerkstoff in einer Schnittdarstellung, wobei der Filter 42 mit einem erfindungsgemäßen Verfahren hergestellt ist. Beispielsweise kann die Struktur des Filters 42 durch die anhand von Fig. 3a-d erläuterte Ausführungsform des Verfahrens erhalten werden.

Der Filter 42 weist Scharfkanten 28 an einer Scharfkantenseite 16 und den Scharfkanten 28 gegenüberliegende Rundkanten 30 an einer Rundkantenseite 18 auf. Hiermit wird eine Durchgangsöffnung 44 gebildet, welche zum Filtrieren vorgesehen ist und eine konische Querschnittsform aufweist. Der Durchmesser *d*₁ der Durchgangsöffnung 44 an der Scharfkantenseite 16 beträgt hierbei zwischen 0,055 mm und 0,4 mm. Der Durchmesser *d*₂ der Durchgangsöffnung 44 an der Rundkantenseite 18 beträgt zwischen 0,09 mm und 0,45 mm.

## Patentansprüche

1. Verfahren zur Herstellung von geätzten Strukturen aus einem Stahlwerkstoff, wobei das Verfahren mindestens die folgenden Schritte in der angegebenen zeitlichen Reihenfolge umfasst:
- Bereitstellen eines Flachprodukts (14) aus einem Stahlwerkstoff, wobei zumindest für einen Abschnitt des Flachprodukts (14) eine Seite des Flachprodukts (14) als Scharfkantenseite (16) ausgewählt wird und die der Scharfkantenseite (16) gegenüberliegende Seite als Rundkantenseite (18) ausgewählt wird;
- Beschichten der Scharfkantenseite (16) des Flachprodukts (14) zumindest teilweise mit einem ätzresistenten Fotolack (20);
- Beschichten der Rundkantenseite (18) des Flachprodukts (14) zumindest teilweise mit einem ätzresistenten Fotolack (20)
- Entwickeln des ätzresistenten Fotolacks (20);
- Durchführen einer ätztechnischen Behandlung des Flachprodukts (14) zum Erzeugen von mindestens einer Scharfkante (28) an der Scharfkantenseite (16) und zum Erzeugen von mindestens einer der Scharfkante (28) gegenüberliegenden Kante (30) an der Rundkantenseite (18);
- Entfernen des Fotolacks (20) auf beiden Seiten des Flachprodukts (14);
- Maskieren der mindestens einen Scharfkante (28) mit einer ätzresistenten Beschichtung (36), und
- Abrunden der mindestens einen Kante (30) auf der Rundkantenseite (18) mit einer weiteren ätztechnischen Behandlung.

2. Verfahren zur Herstellung von geätzten Strukturen aus einem Stahlwerkstoff, wobei das Verfahren mindestens die folgenden Schritte in der angegebenen zeitlichen Reihenfolge umfasst:
- Bereitstellen eines Flachprodukts (14) aus einem Stahlwerkstoff, wobei zumindest für einen Abschnitt des Flachprodukts (14) eine Seite des Flachprodukts (14) als Scharfkantenseite (16) ausgewählt wird und die der Scharfkantenseite (16) gegenüberliegende Seite als Rundkantenseite (18) ausgewählt wird;
- Beschichten der Scharfkantenseite (16) des Flachprodukts (14) zumindest teilweise mit einem ätzresistenten Fotolack (20);
- Beschichten der Rundkantenseite (18) des Flachprodukts (14) zumindest teilweise mit einem ätzresistenten Fotolack (20), wobei das Flachprodukt (14) auf der Rundkantenseite (18) eine metallische Beschichtung (34) aus einem im Vergleich zum Stahlwerkstoff chemisch unedleren Metallwerkstoff aufweist;
- Entwickeln des ätzresistenten Fotolacks (20);
- Durchführen einer ätztechnischen Behandlung des Flachprodukts (14) zum Erzeugen von mindestens einer Scharfkante (28) an der Scharfkantenseite (16) und zum Erzeugen von mindestens einer der Scharfkante (28) gegenüberliegenden Rundkante (30) an der Rundkantenseite (18).

3. Verfahren zur Herstellung von geätzten Strukturen aus einem Stahlwerkstoff, wobei das Verfahren mindestens die folgenden Schritte in der angegebenen zeitlichen Reihenfolge umfasst:
- Bereitstellen eines Flachprodukts (14) aus einem Stahlwerkstoff, wobei zumindest für einen Abschnitt des Flachprodukts (14) eine Seite des Flachprodukts (14) als Scharfkantenseite (16) ausgewählt wird und die der Scharfkantenseite (16) gegenüberliegende Seite als Rundkantenseite (18) ausgewählt wird;
- Beschichten der Scharfkantenseite (16) des Flachprodukts (14) zumindest teilweise mit einem ätzresistenten Fotolack (20);
- Beschichten der Rundkantenseite (18) des Flachprodukts (14) zumindest teilweise mit einer ätzbaren Beschichtung (22);
- Entwickeln des ätzresistenten Fotolacks (20); und
- Durchführen einer ätztechnischen Behandlung des Flachprodukts (14) zum Erzeugen von mindestens einer Scharfkante (28) an der Scharfkantenseite (16) und zum Erzeugen von mindestens einer der Scharfkante (28) gegenüberliegenden Rundkante (30) an der Rundkantenseite (18).

4. Verfahren nach Anspruch 1, 2 oder 3, wobei als geätzte Struktur aus einem Stahlwerkstoff eine Schneide oder ein Filter hergestellt wird.

5. Verfahren nach Anspruch 3 oder 4,
wobei die ätzbare Beschichtung (22) einen ätzbaren Fotolack umfasst.

6. Verfahren nach Anspruch 2,
wobei die metallische Beschichtung (34) auf den Stahlwerkstoff plattiert, galvanisch aufgebracht, mittels chemischer Gasphasenabscheidung aufgebracht und/oder mittels physikalischer Gasphasenabscheidung aufgebracht wird.

7. Verfahren nach Anspruch 1,
wobei die ätzresistente Beschichtung (36) einen ätzresistenten Fotolack und/oder Wachs umfasst.

8. Verfahren nach einem der vorhergehenden Ansprüche,
wobei das Abrunden der mindestens einen Kante (30) auf der Rundkantenseite (18) ein mechanisches, elektrochemisches und/oder optisches Abtragen von Material umfasst.

9. Verfahren nach einem der vorhergehenden Ansprüche,
wobei der ätzresistente Fotolack (20) mindestens ein Polypeptid umfasst.

10. Verfahren nach einem der vorhergehenden Ansprüche,
wobei der ätzresistente Fotolack (20) mindestens ein Oxidationsmittel umfasst, insbesondere ein Oxidationsmittel umfassend mindestens eines ausgewählt aus Cr(VI)-Salzen, Mn(VII)-Salzen und Fe (III)-Salzen.

11. Verfahren nach einem der vorhergehenden Ansprüche,
wobei der ätzresistente Fotolack (20) mit einer Schichtdicke von 1 µm bis 10 µm, insbesondere mit einer Schichtdicke von 2 µm bis 6 µm aufgebracht wird.

12. Verfahren nach einem der vorhergehenden Ansprüche,
wobei das Entwickeln des ätzresistenten Fotolacks (20) eine Belichtung umfasst.

13. Verfahren nach einem der vorhergehenden Ansprüche,
wobei das Flachprodukt eine Dicke von 0,01 mm bis 1,0 mm.

14. Verfahren nach einem der vorhergehenden Ansprüche,
wobei die ätztechnische Behandlung mit einer sauren Lösung durchgeführt wird.

15. Verfahren nach einem der vorhergehenden Ansprüche,
wobei mit der ätztechnischen Behandlung des Flachprodukts (14) an der Kante (30) der Rundkantenseite (18) eine Hinterätzung erzeugt wird.

16. Schneide aus einem Stahlwerkstoff, wobei die Schneide mit einem Verfahren nach einem der Ansprüche 1 bis 15 hergestellt ist,
- mit mindestens einer als Schneidkante ausgebildeten Scharfkante (28) an einer Scharfkantenseite (16) und
- mit mindestens einer der mindestens einen Schneidkante (28) gegenüberliegenden Rundkante (30) an einer Rundkantenseite (18),
- wobei die mindestens eine Schneidkante (28) einen Katenradius von 0,5 µm bis 5 µm aufweist, und/oder
- wobei die Rundkante (30) einen Kantenradius von 0,01 mm bis 0,5 mm aufweist.

17. Filter aus einem Stahlwerkstoff, wobei der Filter mit einem Verfahren nach einem der Ansprüche 1 bis 15 hergestellt ist,
- mit mindestens einer Scharfkante (28) an einer Scharfkantenseite (16) und
- mit mindestens einer der mindestens einen Scharfkante (28) gegenüberliegenden Rundkante (30) an einer Rundkantenseite (18),
- wobei die mindestens eine Scharfkante (28) einen Kantenradius von 1 µm bis 5 µm aufweist und/oder
- wobei die Rundkante (30) einen Kantenradius von 0,01 mm bis 0,5 mm aufweist.

## Claims

1. Method of producing etched structures from a steel material, the method comprising at least the following steps in the time sequence indicated:
- providing a flat product (14) made of a steel material, wherein one side of the flat product (14) is selected as the sharp-edge side (16) for at least one section of the flat product (14) and the side opposite the sharp-edge side (16) is selected as the round-edge side (18);
- coating the sharp-edge side (16) of the flat product (14) at least partially with an etch-resistant photoresist (20);
- coating the round edge side (18) of the flat product (14) at least partially with an etch-resistant photoresist (20)
- developing the etch-resistant photoresist (20);
- carrying out an etching treatment of the flat product (14) to produce at least one sharp edge (28) on the sharp edge side (16) and to produce at least one edge (30) opposite the sharp edge (28) on the round edge side (18);
- removal of the photoresist (20) on both sides of the flat product (14);
- masking the at least one sharp edge (28) with an etch-resistant coating (36), and
- rounding of the at least one edge (30) on the round edge side (18) with a further etching treatment.

2. Method of producing etched structures from a steel material, the method comprising at least the following steps in the time sequence indicated:
- providing a flat product (14) made of a steel material, wherein one side of the flat product (14) is selected as the sharp-edge side (16) for at least one section of the flat product (14) and the side opposite the sharp-edge side (16) is selected as the round-edge side (18);
- coating the sharp-edge side (16) of the flat product (14) at least partially with an etch-resistant photoresist (20);
- coating the round edge side (18) of the flat product (14) at least partially with an etch-resistant photoresist (20), wherein the flat product (14) has a metallic coating (34) on the round edge side (18) made of a metal material which is chemically less noble than the steel material;
- developing the etch-resistant photoresist (20);
- carrying out an etching treatment of the flat product (14) to produce at least one sharp edge (28) on the sharp edge side (16) and to produce at least one round edge (30) opposite the sharp edge (28) on the round edge side (18).

3. Method of manufacturing etched structures from a steel material, the method comprising at least the following steps in the time sequence indicated:
- providing a flat product (14) made of a steel material, wherein one side of the flat product (14) is selected as the sharp-edge side (16) for at least one section of the flat product (14) and the side opposite the sharp-edge side (16) is selected as the round-edge side (18);
- coating the sharp-edge side (16) of the flat product (14) at least partially with an etch-resistant photoresist (20);
- coating the round edge side (18) of the flat product (14) at least partially with an etchable coating (22);
- developing the etch-resistant photoresist (20); and
- carrying out an etching treatment of the flat product (14) to produce at least one sharp edge (28) on the sharp edge side (16) and to produce at least one round edge (30) opposite the sharp edge (28) on the round edge side (18).

4. Process according to claim 1, 2 or 3, wherein a cutting edge or a filter is produced as an etched structure from a steel material.

5. Process according to claim 3 or 4,
wherein the etchable coating (22) comprises an etchable photoresist.

6. Process according to claim 2,
wherein the metallic coating (34) is plated onto the steel material, applied by electroplating, applied by chemical vapour deposition and/or applied by physical vapour deposition.

7. Process according to claim 1,
wherein the etch-resistant coating (36) comprises an etch-resistant photoresist and/or wax.

8. Method according to one of the preceding claims,
wherein the rounding of the at least one edge (30) on the round edge side (18) comprises a mechanical, electrochemical and/or optical removal of material.

9. Method according to one of the preceding claims,
wherein the etch-resistant photoresist (20) comprises at least one polypeptide.

10. Method according to one of the preceding claims,
wherein the etch-resistant photoresist (20) comprises at least one oxidising agent, in particular an oxidising agent comprising at least one selected from Cr(VI) salts, Mn(VII) salts and Fe(III) salts.

11. Method according to one of the preceding claims,
wherein the etch-resistant photoresist (20) is applied with a layer thickness of 1 µm to 10 µm, in particular with a layer thickness of 2 µm to 6 µm.

12. Method according to any one of the preceding claims,
wherein the developing of the etch-resistant photoresist (20) comprises an exposure.

13. Method according to one of the preceding claims,
whereby the flat product has a thickness of 0.01 mm to 1.0 mm.

14. Method according to one of the preceding claims,
where the etching treatment is carried out with an acidic solution.

15. Method according to any of the preceding claims,
wherein the etching treatment of the flat product (14) produces a back etching on the edge (30) of the round edge side (18).

16. Cutting edge made of a steel material, wherein the cutting edge is manufactured by a method according to any one of claims 1 to 15,
- with at least one sharp edge (28) in the form of a cutting edge on one sharp edge side (16), and
- with at least one round edge (30) opposite the at least one cutting edge (28) on one round edge side (18),
- wherein the at least one cutting edge (28) has a cutting radius of 0.5 µm to 5 µm, and/or
- where the round edge (30) has an edge radius of 0.01 mm to 0.5 mm.

17. Filter made of a steel material, wherein the filter is manufactured by a method according to any one of claims 1 to 15,
- with at least one sharp edge (28) on one sharp edge side (16) and
- with at least one round edge (30) opposite the at least one sharp edge (28) on one round edge side (18),
- wherein the at least one sharp edge (28) has an edge radius of 1 µm to 5 µm and/or
- where the round edge (30) has an edge radius of 0.01 mm to 0.5 mm.

## Revendications

1. Procédé de fabrication de structures gravées à partir d'un matériau en acier, le procédé comprenant au moins les étapes suivantes dans l'ordre chronologique indiqué:
- mettre à disposition un produit plat (14) à partir d'un matériau en acier, où, au moins pour une section du produit plat (14), un côté du produit plat (14) est sélectionné comme côté à arête vive (16) et le côté opposé au côté à arête vive (16) est sélectionné comme côté à arête ronde (18) ;
- revêtir au moins partiellement le côté à arête vive (16) du produit plat (14) avec une laque photosensible (20) résistant à la gravure ;
- revêtir au moins partiellement le côté à arête ronde (18) du produit plat (14) avec une laque photosensible (20) résistant à la gravure ;
- développer la laque photosensible (20) résistant à la gravure ;
- exécuter un traitement technique de gravure du produit plat (14) pour produire au moins une arête vive (28) sur le côté à arête vive (16) et pour produire au moins une arête (30) opposée à l'arête vive (28) sur le côté à arête ronde (18);
- retirer la laque photosensible (20) des deux côtés du produit plat (14);
- masquer l'au moins une arête vive (28) avec un revêtement résistant à la gravure (36), et
- arrondir l'au moins une arête (30) du côté à arête ronde (18) avec un traitement technique de gravure additionnel.

2. Procédé de fabrication de structures gravées à partir d'un matériau en acier, le procédé comprenant au moins les étapes suivantes dans l'ordre chronologique indiqué:
- mettre à disposition un produit plat (14) à partir d'un matériau en acier, où, au moins pour une section du produit plat (14), un côté du produit plat (14) est sélectionné comme côté à arête vive (16) et le côté opposé au côté à arête vive (16) est sélectionné comme côté à arête ronde (18) ;
- revêtir au moins partiellement le côté à arête vive (16) du produit plat (14) avec une laque photosensible (20) résistant à la gravure ;
- revêtir au moins partiellement le côté à arête ronde (18) du produit plat (14) avec une laque photosensible (20) résistant à la gravure, le produit plat (14) présentant sur le côté à arête ronde (18) un revêtement métallique (34) en un matériau métallique chimiquement moins noble par rapport au matériau en acier ;
- développer la laque photosensible (20) résistant à la gravure ;
- exécuter un traitement technique de gravure du produit plat (14) pour produire au moins une arête vive (28) sur le côté à arête vive (16) et pour produire au moins une arête ronde (30) opposée à l'arête vive (28) sur le côté à arête ronde (18).

3. Procédé de fabrication de structures gravées à partir d'un matériau en acier, le procédé comprenant au moins les étapes suivantes dans l'ordre chronologique indiqué:
- mettre à disposition un produit plat (14) à partir d'un matériau en acier, où, au moins pour une section du produit plat (14), un côté du produit plat (14) est sélectionné comme côté à arête vive (16) et le côté opposé au côté à arête vive (16) est sélectionné comme côté à arête ronde (18) ;
- revêtir au moins partiellement le côté à arête vive (16) du produit plat (14) avec une laque photosensible (20) résistant à la gravure ;
- revêtir au moins partiellement le côté à arête ronde (18) du produit plat (14) avec un revêtement pouvant être gravé (22) ;
- développer la laque photosensible (20) résistant à la gravure ;
- exécuter un traitement technique de gravure du produit plat (14) pour produire au moins une arête vive (28) sur le côté à arête vive (16) et pour produire au moins une arête ronde (30) opposée à l'arête vive (28) sur le côté à arête ronde (18).

4. Procédé selon la revendication 1, 2 ou 3, dans lequel une lame ou un filtre est fabriqué comme structure gravée à partir d'un matériau en acier.

5. Procédé selon la revendication 3 ou 4,
dans lequel le revêtement pouvant être gravé (22) comprend une laque photosensible pouvant être gravée.

6. Procédé selon la revendication 2,
dans lequel le revêtement métallique (34) est plaqué sur le matériau en acier, déposé par électrolyse, déposé par dépôt chimique en phase vapeur et/ou déposé par dépôt physique en phase vapeur.

7. Procédé selon la revendication 1,
dans lequel le revêtement résistant à la gravure (36) comprend une laque photosensible résistant à la gravure et/ou une cire résistant à la gravure.

8. Procédé selon l'une quelconque des revendications précédentes,
dans lequel l'arrondissement de l'au moins une arête (30) sur le côté à arête ronde (18) comprend un enlèvement de matière mécanique, électrochimique et/ou optique.

9. Procédé selon l'une quelconque des revendications précédentes,
dans lequel la laque photosensible (20) résistant à la gravure comprend au moins un polypeptide.

10. Procédé selon l'une des revendications précédentes,
dans lequel la laque photosensible (20) résistant à la gravure comprend au moins un agent oxydant, en particulier un agent oxydant comprenant au moins un élément choisi parmi les sels de Cr(VI), les sels de Mn(VII) et les sels de Fe(III).

11. Procédé selon l'une des revendications précédentes,
dans lequel la laque photosensible (20) résistante à la gravure est appliquée avec une épaisseur de couche de 1 µm à 10 µm, en particulier avec une épaisseur de couche de 2 µm à 6 µm.

12. Procédé selon l'une des revendications précédentes,
dans lequel le développement de la laque photosensible (20) résistant à la gravure comprend une exposition à la lumière.

13. Procédé selon l'une des revendications précédentes,
dans lequel le produit plat a une épaisseur de 0,01 mm à 1,0 mm.

14. Procédé selon l'une des revendications précédentes,
dans lequel le traitement technique de gravure est exécuté avec une solution acide.

15. Procédé selon l'une des revendications précédentes,
dans lequel, avec le traitement technique de gravure du produit plat (14), une gravure arrière est produite sur l'arête (30) du côté à arête ronde (18).

16. Lame en un matériau en acier, la lame étant fabriquée par un procédé selon l'une des revendications 1 à 15,
- avec au moins une arête vive (28) réalisée sous forme d'arête de coupe sur un côté d'arête vive (16) et
- avec au moins une arête ronde (30) opposée à l'au moins une arête de coupe (28) sur un côté d'arête ronde (18),
- l'au au moins une arête de coupe (28) présentant un rayon d'arête de 0,5 µm à 5 µm, et/ou
- l'arête ronde (30) présentant un rayon d'arête de 0,01 mm à 0,5 mm.

17. Filtre en un matériau en acier, le filtre étant fabriqué par un procédé selon l'une des revendications 1 à 15,
- avec au moins une arête vive (28) sur un côté d'arête vive (16) et
- avec au moins une arête ronde (30) opposée à l'au moins une arête vive (28) sur un côté d'arête ronde (18),
- l'au moins une arête vive (28) présentant un rayon d'arête de 1 µm à 5 µm et/ou
- l'arête ronde (30) présentant un rayon d'arête de 0,01 mm à 0,5 mm.
